(19) Europäisches Patentamt / European Patent Office / Office européen des brevets

(11) **EP 3 763 913 A1**

(12) **DEMANDE DE BREVET EUROPEEN**

(43) Date de publication:
**13.01.2021 Bulletin 2021/02**

(51) Int Cl.:
***E21B 43/16*** (2006.01)

(21) Numéro de dépôt: **19305937.5**

(22) Date de dépôt: **12.07.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeur: **IFP Energies nouvelles
92852 Rueil-Malmaison Cedex (FR)**

(72) Inventeurs:
• **SOULAT, Antoine
92852 RUEIL-MALMAISON CEDEX (FR)**
• **DOUARCHE, Frédéric
92852 RUEIL-MALMAISON CEDEX (FR)**

(54) **PROCEDE D'EXPLOITATION D'UN GISEMENT D'HYDROCARBURES PAR INJECTION D'UN GAZ SOUS FORME DE MOUSSE**

(57)   Procédé d'exploitation d'un gisement d'hydrocarbures par injection d'une solution aqueuse comprenant un gaz sous forme de mousse dans un puits injecteur, comprenant une première étape de détermination d'un modèle de déplacement de la mousse destiné à un simulateur d'écoulement, ce modèle étant fonction d'un facteur de réduction de mobilité du gaz et d'au moins une fonction d'interpolation dépendante du débit d'injection, et une deuxième étape dans laquelle on détermine un indice de productivité corrigé des effets rhéofluidifiants de la mousse dans les mailles traversées par le puits injecteur, à partir d'un indice de productivité déterminé en supposant que la solution aqueuse comprenant le gaz sous forme de mousse est un fluide newtonien, et d'un facteur correctif qui est fonction d'au moins une caractéristique de la solution aqueuse comprenant le gaz sous forme de mousse.

Application notamment à l'exploration et à l'exploitation pétrolière.

## Description

La présente invention concerne le domaine de l'exploitation d'un fluide contenu dans une formation souterraine, plus particulièrement la récupération assistée d'un fluide, tel qu'un fluide hydrocarboné, par injection de mousse.

L'exploitation d'un réservoir pétrolier par récupération primaire consiste à extraire, via un puits dit de production, le pétrole présent du réservoir par l'effet de surpression régnant naturellement au sein du réservoir. Cette récupération primaire ne permet d'accéder qu'à une faible quantité du pétrole contenu dans le réservoir, de l'ordre de 10 à 15% tout au plus.

Pour permettre de poursuivre l'extraction du pétrole, des méthodes secondaires de production sont employées, quand la pression du réservoir devient insuffisante pour déplacer le pétrole encore en place. Notamment, on injecte un fluide (ré-injection de l'eau produite diluée ou non, injection d'eau de mer ou de rivière, ou encore injection de gaz, par exemple) au sein du réservoir hydrocarboné, en vue d'exercer au sein du réservoir une surpression propre à entraîner le pétrole vers le ou les puits de production. Une technique usuelle dans ce cadre est l'injection d'eau (désignée également par le terme anglais « waterflooding »), dans laquelle de grands volumes d'eau sont injectés sous pression dans le réservoir via des puits injecteurs. L'eau injectée entraîne une partie du pétrole qu'elle rencontre et le pousse vers un ou plusieurs puits producteurs. Les méthodes secondaires de production telles que l'injection d'eau ne permettent toutefois d'extraire qu'une partie relativement faible des hydrocarbures en place (typiquement de l'ordre de 30%). Ce balayage partiel est dû notamment au piégeage de l'huile par les forces capillaires, aux différences de viscosité et de densité existant entre le fluide injecté et les hydrocarbures en place, ainsi qu'à des hétérogénéités à des échelles micro- ou macroscopiques (échelle des pores et aussi échelle du réservoir).

Pour essayer de récupérer le reste du pétrole, qui demeure dans les formations souterraines à l'issue de la mise en oeuvre des méthodes primaires et secondaires de production, il existe différentes techniques dites de récupération assistée (connue sous l'acronyme « EOR », correspondant à « Enhanced Oil Recovery »). Parmi ces techniques, on peut citer des techniques s'apparentant à l'injection d'eau précitée, mais employant une eau comprenant des additifs tels que, par exemple, des agents tensio-actifs solubles dans l'eau (on parle alors de « surfactant flooding »). L'emploi de tels agents tensio-actifs induit notamment une diminution de la tension interfaciale eau/pétrole, ce qui est propre à assurer un entraînement plus efficace du pétrole piégé au niveau des constrictions de pores.

On connaît également la récupération assistée par injection de gaz, miscibles ou non (gaz naturel, azote ou $CO_2$). Cette technique permet de maintenir la pression dans le réservoir pétrolier au cours de son exploitation, mais peut aussi permettre, dans le cas de gaz miscibles, de mobiliser les hydrocarbures en place et ainsi d'en améliorer le débit. Un gaz couramment utilisé est le dioxyde de carbone lorsqu'il est disponible à bas coût.

On connaît aussi des techniques alternatives reposant sur une injection de mousse dans le réservoir pétrolier. Cette mousse résulte du mélange intime de gaz et d'une solution d'un additif tensio-actif, ce dernier étant appelé « agent moussant » dans la suite. En raison de sa viscosité apparente élevée, la mousse est considérée comme une alternative au gaz comme fluide d'injection dans les réservoirs d'hydrocarbures. La mobilité de la mousse (la mobilité d'un fluide est définie comme le rapport de la perméabilité relative du fluide et de sa viscosité dynamique) est ainsi réduite par rapport au gaz qui, lui, a tendance à ségréger et à percer rapidement aux puits producteurs, notamment dans les réservoirs hétérogènes et/ou épais. La récupération assistée par injection de mousse est particulièrement attractive car elle requiert l'injection de volumes plus petits que pour d'autres procédés de récupération assistée à base de fluides non moussants.

## Technique antérieure

Les documents suivants seront cités au cours de la description :

Beunat V., Batôt G., Gland N., Pannacci N., Chevallier E., Cuenca A. (2019). Influence of Wettability and Oil Saturation on the Rheological Behavior of CO2-Foams. Presented at the EAGE 20th European Symposium on Improved Oil Recovery.

Gassara O., Douarche F., Braconnier B. , Bourbiaux B. (2017), Equivalence Between Semi-empirical and Population-Balance Foam Models. Transport in Porous Media. 120: 473. https://doi.org/10.1007/s1 1242-017-0935-8

Gassara O., Douarche F., Braconnier B. , Bourbiaux B. (2019). Calibrating and Scaling Semi-empirical Foam Flow Models for the Assessment of Foam-Based EOR Processes (in Heterogeneous Reservoirs). Transport in Porous Media. https://doi.org/10.1007/s11242-018-01223-5

Leeftink, T., Latooij, C., & Rossen, W. (2015). Injectivity errors in simulation of foam EOR. Journal of Petroleum Science and Engineering, 126, 26-34.

Peaceman, D. (1978). Interpretation of Well-Block Pressures in Numerical Reservoir Simulation. Society of Petroleum Engineers Journal, 18(03), 183-194.

van Poolen, H., Bixel, H., & Jargon, J. (1970). Individual Well Pressures in Reservoir Modeling. Oil and Gas Journal, 78-80.

van Poolen, H., Breitenbach, E., & Thurnau, D. (1968). Treatment of Individual Wells and Grids in Reservoir Modeling. Society of Petroleum Engineers Journal, 341-346.

L'exploitation pétrolière d'un gisement consiste à déterminer les zones du gisement présentant le meilleur potentiel pétrolier, à définir des schémas d'exploitation pour ces zones (afin de définir le type de récupération, le nombre et les positions des puits d'exploitation permettant une récupération d'hydrocarbures optimale), à forer des puits d'exploitation et, de façon générale, à mettre en place les infrastructures de production nécessaires au développement du gisement.

Dans le cas d'une récupération assistée par injection de mousse, la définition d'un schéma d'exploitation d'un réservoir pétrolier peut nécessiter de simuler numériquement, de la façon la plus réaliste possible, les écoulements en présence de mousse dans le réservoir considéré. Une telle simulation est réalisée à l'aide d'un simulateur d'écoulement comprenant un modèle de déplacement de la mousse.

Un tel modèle peut nécessiter d'évaluer les performances de la mousse en termes de réduction de mobilité. En général, cette estimation passe par la réalisation d'expériences de laboratoire consistant à mesurer les pertes de charge lors de déplacements de mousse d'une part, d'eau et de gaz non moussant d'autre part dans un échantillon du réservoir pétrolier. Puis, ce modèle de déplacement de la mousse, représentatif des écoulements à l'échelle du laboratoire, est calibré à l'échelle du réservoir avant de réaliser les simulations numériques des écoulements, afin de prédire le bénéfice procuré par l'injection de la mousse en termes d'amélioration de l'efficacité de déplacement des fluides en place.

On connait notamment le procédé décrit dans la demande EP 18305032 (US 15/887498) qui concerne une calibration du modèle de déplacement de la mousse. De cette manière, on peut prédire de manière fiable, par simulation numérique, les écoulements de la mousse dans un réservoir.

Toutefois, les mousses utilisées dans ce contexte sont « rhéofluidifiantes », c'est-à-dire que leur viscosité diminue aux forts gradients de vitesse d'écoulement. Ces vitesses d'écoulement ou gradients de vitesse sont généralement très élevés aux abords d'un puits injecteur ; afin de les simuler de manière réaliste par simulation numérique, il convient d'utiliser des maillages de haute résolution spatiale. Si tel n'est pas le cas, autrement dit en cas de maillage insuffisamment résolu pour simuler de manière fiable les écoulements aux abords de puits, il y a un risque de sous-estimation de la vitesse des fluides aux abords du puits, ce qui peut conduire à une mauvaise estimation de la réduction de mobilité des fluides injectés, et donc à une mauvaise estimation de l'injectivité des formulations. En pratique, les prévisions issues de simulations biaisées par cet effet sous estiment les performances du procédé considéré (volume de mousse injecté fortement sous-estimé par exemple). Par injectivité, on entend la capacité d'un puits à débiter un fluide donné pour des conditions de fonctionnement en terme de pression et/ou débit imposées.

Plus précisément, dans le cas d'une mousse aux propriétés rhéofluidifiantes, une simulation numérique d'écoulement mise en oeuvre au moyen d'un maillage insuffisamment résolu à l'échelle du puits peut conduire à une surestimation des pressions au niveau des mailles où sont localisés les puits injecteurs (mailles puits). Ces surpressions se traduisent par des performances dégradées d'injectivité (diminution du débit d'injection) prédites par simulation. En effet, la sous-estimation des vitesses proches-puits conduit à négliger localement le comportement rhéofluidifiant de la mousse injectée, avec un impact négatif sur l'injectivité.

On connait notamment le document (Leeftink et al., 2015) qui met en évidence les effets d'échelle sur l'injectivité en résolvant analytiquement le problème et en considérant une configuration simplifiée. Toutefois, ce document ne propose pas une solution applicable à la simulation numérique de réservoir.

La présente invention permet de pallier ces inconvénients. Plus précisément, l'invention concerne une correction à appliquer à l'indice de productivité relatif aux mailles traversées par les puits injecteurs, indice de productivité qui est une donnée d'entrée d'un simulateur d'écoulement. Une telle correction permet de prédire ensuite, par simulation numérique, une injectivité fiable dans le cas de mousses rhéofluidifiantes.

## Résumé de l'invention

La présente invention concerne un procédé d'exploitation des hydrocarbures présents dans un gisement, au moyen d'une injection d'une solution aqueuse comprenant un gaz sous forme de mousse et d'un simulateur d'écoulement dans au moins un puits injecteur, ledit simulateur d'écoulement reposant sur un modèle de déplacement dudit gaz sous forme de mousse, ledit modèle de déplacement s'exprimant en fonction d'une fonctionnelle de réduction de mobilité dudit gaz, ledit simulateur d'écoulement reposant sur un modèle de déplacement dudit gaz sous forme de mousse, ledit modèle de déplacement s'exprimant en fonction d'une fonctionnelle de réduction de mobilité dudit gaz, ladite fonctionnelle s'exprimant en fonction d'un facteur de réduction de mobilité dudit gaz et d'au moins une fonction d'interpolation dudit facteur de réduction de mobilité, ladite fonction d'interpolation étant fonction d'au moins un paramètre relatif à au moins une caractéristique de la mousse et d'au moins deux constantes, ledit au moins un paramètre de ladite fonction d'interpolation correspondant au débit d'injection dudit gaz,.

Selon l'invention, à partir d'au moins un échantillon de ladite formation, d'une représentation maillée représentative dudit gisement, le procédé selon l'invention comprend au moins les étapes suivantes :

A. on détermine ledit modèle de déplacement en déterminant ledit facteur de réduction de mobilité dudit gaz et lesdites constantes de ladite fonction d'interpolation dudit modèle de déplacement, à partir au moins de mesures de pertes de charge réalisées au cours d'injections dans ledit échantillon dudit gaz sous forme non moussante et dudit gaz sous forme de mousse pour une pluralité de valeurs dudit débit d'injection dudit gaz ;;

B- pour chacune des mailles de ladite représentation maillée traversées par ledit puits injecteur, on détermine un indice de productivité IP corrigé des effets rhéofluidifiants de ladite mousse dans ladite maille selon une formule du type :

$$IP = \alpha.IP_0$$

où $IP_0$ est un indice de productivité déterminé en supposant que ladite solution aqueuse comprenant ledit gaz sous forme de mousse est un fluide newtonien, et $\alpha$ est un facteur correctif qui est fonction d'au moins une caractéristique de ladite solution aqueuse comprenant ledit gaz sous forme de mousse ;

C. à partir dudit modèle de déplacement, dudit simulateur d'écoulement, de ladite représentation maillée et desdits indices de productivité déterminés pour lesdites mailles de ladite représentation maillée traversées par lesdits puits injecteur, on détermine un schéma d'exploitation dudit gisement et on exploite lesdits hydrocarbures.

Selon une mise en oeuvre de l'invention, à partir de mesures de perméabilités relatives conventionnelles audit gaz sous forme non moussante et de mesures de perméabilités relatives conventionnelles à la phase aqueuse de ladite solution, on peut réaliser l'étape A) selon au moins les sous-étapes suivantes :

i. pour chacune desdites fonctions d'interpolation, on réalise une injection dans ledit échantillon dudit gaz sous forme non moussante et dudit gaz sous forme de mousse pour une pluralité de valeurs dudit paramètre relatif à ladite fonction, on mesure respectivement une perte de charge avec mousse et une perte de charge sans mousse pour chacune desdites valeurs dudit paramètre relatif à ladite fonction, et on détermine au moins une valeur dudit paramètre relatif à ladite fonction d'interpolation maximisant un rapport entre lesdites pertes de charge sans mousse et lesdites pertes de charge avec mousse mesurées pour ladite fonction ;

ii. à partir au moins desdites mesures de perte de charge avec mousse et sans mousse réalisées pour lesdites valeurs desdits paramètres relatifs auxdites fonctions maximisant ledit rapport, desdites mesures de perméabilités relatives conventionnelles audit gaz sous forme non moussante et desdites mesures de perméabilités relatives conventionnelles à ladite phase aqueuse, on détermine ledit facteur de réduction de mobilité et on calibre lesdites constantes de chacune desdites fonctions d'interpolation.

Selon une mise en oeuvre de l'invention, ledit modèle de déplacement de la mousse peut s'exprimer sous la forme :

$$k_{rg}^{FO}(S_g) = FM\, k_{rg}(S_g)$$

où $k_{rg}^{FO}(S_g)$ est la perméabilité relative audit gaz sous forme de mousse pour une valeur de saturation en gaz $S_g$ donnée, $K_{rg}(S_g)$ est la perméabilité relative audit gaz non moussant pour ladite valeur de saturation en gaz $S_g$, et $FM$ est ladite fonctionnelle s'exprimant sous la forme :

$$FM = \frac{1}{1 + \left(M^{opt} - 1\right) * \prod_{k} F_k}$$

où $M^{opt}$ est ledit facteur de réduction de mobilité dudit gaz et $F_k$ est une desdites fonctions d'interpolation, avec $k \geq 1$.

Selon une mise en oeuvre de l'invention, lesdites fonctions d'interpolation peuvent être au nombre de quatre et lesdits paramètres desdites fonctions sont une concentration en agent moussant, une saturation en eau, une saturation en huile, et ledit débit d'injection dudit gaz.

Selon une mise en oeuvre de l'invention, on peut calibrer lesdites constantes d'au moins une desdites fonctions d'interpolation par une méthode des moindres carrés, telle qu'une méthode inverse basée sur une minimisation itérative d'une fonction objectif.

Selon une mise en oeuvre de l'invention, après que l'étape i) ait été appliquée pour chacune desdites fonctions d'interpolation et avant l'étape ii), on peut réaliser une injection dans ledit échantillon dudit gaz sous forme non moussante et dudit gaz sous forme de mousse selon lesdites valeurs de chacun desdits paramètres maximisant ledit rapport, on peut mesurer respectivement une perte de charge avec mousse et une perte de charge sans mousse pour l'ensemble desdites valeurs desdits paramètres maximisant ledit rapport, et on peut appliquer l'étape ii) à partir en outre desdites mesures de perte de charge avec mousse et sans mousse réalisées pour ledit ensemble desdites valeurs desdits paramètres maximisant ledit rapport.

Selon une mise en oeuvre de l'invention, on peut déterminer ledit indice de productivité audit puits injecteur $IP_0$ selon la formule de Peaceman.

Selon une mise en oeuvre de l'invention, on peut déterminer ledit indice de productivité $IP_0$ en supposant que ladite solution aqueuse comprenant ledit gaz sous forme de mousse est un fluide Newtonien selon la formule suivante :

$$IP_0 = \frac{2\pi hk}{\ln\left(\frac{r_0'}{r_w}\right)}$$

où $r_w$ est le rayon dudit puits injecteur, $h$ est la hauteur de ladite maille, $k$ la perméabilité du milieu poreux dudit gisement et où $r_0'$ est un rayon équivalent de ladite maille traversée par ledit puits dans une représentation maillée à géométrie radiale.

Selon une mise en oeuvre de l'invention, ledit rayon $r_0'$ équivalent de ladite maille traversée par ledit puits peut être défini tel que :

$$P(r) = P_0 + \frac{\mu Q}{2\pi hk} \ln\left(\frac{r}{r_0'}\right) \text{ avec } P(r_0') = P_0$$

où P représente l'évolution de la pression en fonction de la distance radiale r, $P_0$ désigne la pression assignée à ladite maille traversée par ledit puits, Q est le débit d'injection dudit gaz, et $\mu$ est la viscosité dudit gaz.

Selon une mise en oeuvre de l'invention, ledit facteur correctif peut s'exprimer selon la formule :

$$\alpha = \frac{1 + \frac{\lambda_g(r_w)}{\lambda_w(r_w)} FM(r_w)}{1 + \overline{\frac{\lambda_g}{\lambda_w} FM}}$$

où $\lambda_g$ est une mobilité associée à la phase gaz, $\lambda_w$ est une mobilité associée à la phase aqueuse, $r_w$ est le rayon dudit puits, $FM(r_w)$ est ladite fonctionnelle de réduction de mobilité du gaz jusqu'au rayon dudit puits, et $\overline{\frac{\lambda_g}{\lambda_w} FM}$ est la moyenne du produit de ladite fonctionnelle de réduction de mobilité dudit gaz par le rapport desdites mobilités associées à ladite phase gaz et à ladite phase aqueuse, ladite moyenne étant estimée dans ladite maille traversée par ledit puits.

Selon une mise en oeuvre de l'invention, ledit facteur correctif peut s'exprimer selon la formule :

$$\alpha = \frac{1 + \dfrac{f_g}{1 - f_g}}{1 + \overline{\dfrac{\lambda_g}{\lambda_w} FM}}$$

où $\lambda_g$ est une mobilité associée à la phase gaz, $\lambda_w$ est une mobilité associée à la phase aqueuse, $\overline{\dfrac{\lambda_g}{\lambda_w} FM}$ est la moyenne du produit de ladite fonctionnelle de réduction de mobilité dudit gaz par le rapport desdites mobilités associées à ladite phase gaz et à ladite phase aqueuse, ladite moyenne étant estimée dans ladite maille traversée par ledit puits, et $f_g$ est la qualité de la mousse.

Selon une mise en oeuvre de l'invention, ledit facteur correctif peut s'exprimer selon la formule :

$$\alpha = 1 + \frac{f_g}{1 - f_g}$$

où $f_g$ est la qualité de la mousse.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé tel que décrit ci-dessus, lorsque ledit programme est exécuté sur un ordinateur.

D'autres caractéristiques et avantages du procédé selon l'invention, apparaîtront à la lecture de la description ci-après d'exemples non limitatifs de réalisations, en se référant aux figures annexées et décrites ci-après.

**Liste des figures**

La figure 1 présente des courbes de perméabilités relatives au gaz, à l'eau et à l'huile et relatives à un exemple d'application du procédé selon l'invention.

La figure 2 présente une évolution dans le temps des vitesses d'écoulement de la phase gaz en fond de puits estimées sur un premier maillage et sur un deuxième maillage.

La figure 3 présente des courbes d'évolution dans le temps de la pression en fond du puits injecteur obtenues avec un indice de productivité déterminé selon l'art antérieur et selon une mise en oeuvre de l'invention, ainsi qu'une courbe de référence d'évolution dans le temps de la pression en fond du puits injecteur.

**Description des modes de réalisation**

De façon générale, l'un des objets de l'invention concerne un procédé d'exploitation d'un gisement comportant des hydrocarbures, au moyen d'une injection d'une solution aqueuse comprenant un gaz sous forme de mousse dans au moins un puits injecteur, et notamment la détermination d'un schéma d'exploitation des hydrocarbures du gisement étudié au moyen d'un simulateur d'écoulement.

En particulier, le procédé selon l'invention vise, à partir de mesures réalisées en laboratoire, à déterminer un modèle de déplacement du gaz sous forme de mousse ainsi qu'une correction à appliquer à l'indice de productivité du puits injecteur, le modèle de déplacement de la mousse et l'indice de productivité étant des entrées du simulateur d'écoulement.

Les définitions suivantes sont utilisées :

- mousse : il s'agit d'une phase dispersée dans une autre phase par l'adjonction d'un agent moussant dans l'une des deux phases. L'une des phases peut être une solution aqueuse et l'autre phase est un gaz, tel que du gaz naturel, de l'azote ou du $CO_2$. L'écoulement de la mousse dans un milieu poreux est assimilable macroscopiquement (à l'échelle d'un échantillon tel qu'une carotte) à l'écoulement d'une phase homogène unique obéissant à la loi de Darcy monophasique, mais dont la viscosité, appelée « viscosité apparente » ci-après, est bien supérieure (de l'ordre de 100 à 1000 fois plus, voire plus encore) à celle du gaz qui la constitue pour l'essentiel. L'agent moussant peut être un tensio-actif.

- qualité de la mousse : il s'agit du rapport entre le débit de gaz $u_g$ sur le débit total solution + gaz. Dans le cas où la solution est une solution aqueuse, injectée selon un débit $u_w$, on peut écrire la qualité de la mousse $f_g$ sous la forme :

$$f_g = \frac{u_g}{(u_g + u_w)}$$

Ainsi définis, les débits respectifs de la solution et du gaz déterminent une valeur $f_g$ de la qualité de la mousse.

- indice de productivité d'un puits : il s'agit du ratio entre le débit total en conditions de surface et la perte de charge entre le fond de puits et le réservoir. C'est une grandeur couramment utilisée dans le domaine, et qui reflète le potentiel d'un puits. Pour un puits injecteur, cet indice décrit la capacité du puits à injecter un ou plusieurs fluide(s) pour des conditions en pression/débit données, c'est-à-dire son injectivité.

Le procédé selon l'invention requiert de disposer de :

- un échantillon de la formation souterraine étudiée, prélevé par carottage in situ par exemple ;
- un simulateur d'écoulement reposant sur un modèle de déplacement du gaz sous forme de mousse (cf. ci-dessous) ;
- de mesures de perméabilités relatives conventionnelles au gaz sous forme non moussante et de mesures de perméabilités relatives conventionnelles à la phase aqueuse : il peut s'agir de mesures réalisées expressément pour le besoin du procédé selon l'invention (le spécialiste a parfaite connaissance de la manière de conduire de telles expériences de laboratoire), mais il peut également s'agir de courbes pré-établies, ou encore de fonctions analytiques calibrées à partir de corrélations bien connues du spécialiste.

Le procédé selon l'invention requiert de disposer d'un simulateur d'écoulement comportant un modèle de déplacement de la mousse. Selon l'invention, le modèle de déplacement de la mousse repose sur l'hypothèse que le gaz présent sous forme de mousse voit sa mobilité réduite d'un facteur donné dans des conditions fixées de formation et d'écoulement de la mousse. La formulation d'un tel modèle, utilisée par de nombreux simulateurs d'écoulement, consiste en une modification des seules perméabilités relatives au gaz lorsque le gaz est présent sous forme de mousse, ce qui, pour une saturation en gaz $S_g$ donnée, s'exprime selon une formule du type :

$$k_{rg}^{FO}(S_g) = FM \, k_{rg}(S_g) \qquad\qquad (1)$$

où $k_{rg}^{FO}(S_g)$ est la perméabilité relative au gaz sous forme de mousse, qu'on exprime comme le produit d'une fonction $FM$ par la perméabilité relative au gaz non moussant $k_{rg}(S_g)$ pour la même valeur de saturation en gaz $S_g$ (notée plus loin $S_g^{FO}$). Une hypothèse sous-jacente aux modèles de mousse actuels est que la perméabilité relative à l'eau (ou au liquide par extension) est supposée inchangée, que le gaz soit présent sous forme de phase continue ou sous forme de mousse. Dans cette hypothèse, la fonctionnelle de réduction de mobilité du gaz, notée $FM$ par la suite, s'exprime selon une formule du type :

$$FM = \frac{1}{1 + \left(M_{mod}^{opt} - 1\right) * \prod_k F_k(V_k)} \qquad\qquad (2)$$

où :

- $M_{mod}^{opt}$ est un facteur (dit "optimal" dans la suite) de réduction de mobilité correspondant au rapport des perméabilités relatives au gaz ($k_{rg}$) et à la mousse $\left(k_{rg}^{FO}\right)$ dans des conditions (dites "optimales" dans la suite) permettant de réduire la mobilité du gaz, c'est-à-dire les conditions dans lesquelles les termes $F_k(V_k)$ définis ci-dessous valent 1, soit :

$$M_{\text{mod}}^{opt} = \frac{k_{rg}\left(S_{g,opt}^{FO}\right)}{k_{rg}^{FO}\left(S_{g,opt}^{FO}\right)} = \frac{1}{FM_{opt}} \qquad (3)$$

- les termes $F_k(V_k)$ (avec k égal ou supérieur à 1) sont les valeurs des fonctions $F_k$ d'interpolation du facteur de réduction de mobilité entre la valeur $M_{\text{mod}}^{opt}$ et 1, qui dépendent chacune d'un paramètre $V_k$ relatif à au moins une caractéristique de la mousse, et qui font intervenir un certain nombre de constantes de calibration à calibrer comme expliqué ci-après. De manière classique, le paramètre $V_k$ peut être notamment la concentration en agent moussant $C_s^w$, la saturation en eau $S_w$, la saturation en huile $S_0$, ou encore le débit de gaz $u_g$.

Selon l'invention, le modèle de déplacement de la mousse comprend au moins une fonction d'interpolation (classiquement notée $F_4$) dépendant d'un paramètre correspondant au débit d'injection (classiquement noté $V_4$). Selon une mise en oeuvre de l'invention, la fonction d'interpolation $F_4$ s'écrit selon une formule du type :

$$F_4 = \left(\frac{N_c^*}{Max(N_c, N_c^*)}\right)^{e_c} \qquad (4)$$

où :

- $N_c$ est un nombre sans dimension exprimant le rapport entre forces visqueuses (liées à l'écoulement du gaz) et forces capillaires à l'échelle locale, lequel rapport peut, par exemple, être défini selon une formule du type

$$N_c = \frac{\mu_g u_g}{\phi \sigma_{wg}(C_s^w)} = \frac{\mu_g f_g u_t}{\phi \sigma_{wg}(C_s^w)}$$

les variables intervenant dans le calcul de $N_c$ étant la porosité $\phi$, la qualité de la mousse $f_g$, la vitesse d'écoulement $u_t$ (vitesse totale des deux phases constituant la mousse), la tension interfaciale eau-gaz $\sigma_{gw}$ (qui est fonction de la concentration en agent moussant $C_s^w$ de la phase aqueuse), ainsi que la viscosité du gaz $\mu_g$. L'exposant $e_c$ est une constante à calibrer.

- $N_c^*$ est la valeur de référence du nombre capillaire $N_c$ calculée pour le gradient de pression de référence (égal au gradient minimal appliqué $\nabla P_{\min}$ permettant de générer de la mousse en milieu poreux), c'est-à-dire encore pour la qualité minimale permettant de générer la mousse soit :

$$N_c^* = \frac{\mu_g f_g^{\min} u_t}{\phi(f_g^{\min}) \sigma_{wg}(C_s^w)}.$$

Ainsi, selon l'invention, les constantes du modèle de déplacement de la mousse à déterminer sont au moins le facteur de réduction de mobilité optimal $M_{\text{mod}}^{opt}$ tel que défini selon les équation (2) et (3), la constante $N_c^*$ et la constante $e_c$. Il est important de calibrer le modèle de déplacement de la mousse en fonction du débit d'injection car, sans cela, la viscosité apparente de la mousse ne diminue pas au voisinage des puits injecteurs, lieu de forts gradients de vitesse (caractère rhéofluidifiant de la mousse), ce qui pourra avoir comme effet de sous-estimer les performances du procédé considéré (volume de mousse injecté fortement sous-estimé par exemple).

Selon un mode de mise en oeuvre de l'invention, la fonctionnelle de réduction de mobilité du gaz, notée *FM,* peut comporter quatre fonctions d'interpolation $F_k(V_k)$ et chacune de ces fonctions comporte deux constantes à calibrer à partir de données expérimentales. Selon un mode de mise en oeuvre de l'invention dans lequel la fonctionnelle de réduction de mobilité du gaz comporte quatre fonctions d'interpolation $F_k(V_k)$, on peut définir :

- la fonction d'interpolation $F_1$ relative au paramètre $V_1 = C_s^w$ (concentration en agent moussant $C_s^w$) par une formule du type :

$$F_1 = \left( \frac{Min(C_s^w, C_s^{w-ref})}{C_s^{w-ref}} \right)^{e_s} \qquad (5)$$

et pour laquelle les constantes à calibrer sont l'exposant $e_s$ et la constante $C_s^{w-ref}$ qui correspond à la concentration en agent moussant dans des conditions optimales de référence ;

- la fonction d'interpolation $F_2$ relative au paramètre $V_2 = S_w$ (saturation en eau), par une formule du type :

$$F_2 = \left[ 0.5 + \frac{\arctan[f_w(S_w - S_w^*)]}{\pi} \right] \qquad (6)$$

et pour laquelle les constantes à déterminer sont la constante $f_w$ qui régit la transition (en fonction de la saturation en eau) entre les états moussant et non moussant et la constante $S_w^*$, qui représente la saturation en eau de transition entre états moussants stable et instable ;

- la fonction d'interpolation $F_3$ relative au paramètre $V_3 = S_o$ (saturation en huile) par une formule du type :

$$F_3 = \left( \frac{Max[0; S_o^* - S_o]}{S_o^*} \right)^{e_o} \qquad (7)$$

où $S_o^*$ est la saturation en huile au-delà de laquelle la mousse perd toutes ses facultés à réduire la mobilité du gaz, et l'exposant $e_o$ est une constante à déterminer ;

- la fonction d'interpolation $F_4$ relative au paramètre $V_4 = u_g$ (débit de gaz), telle que définie ci-dessus (cf équation (4) ci-dessus) et pour laquelle la constante $N_c^*$ et la constante $e_c$ sont à déterminer.

De façon générale, on peut montrer qu'une fonction quelconque d'interpolation $F_k$ du paramètre $V_k$ peut s'écrire sous la forme :

$$F_k(V_k) = \frac{\frac{1}{FM} - 1}{\frac{1}{FM_{opt}} - 1} = \frac{M_{mod}(V_k) - 1}{M_{mod}^{opt} - 1} \qquad (8)$$

où $M_{mod}(V_k)$ est la réduction de mobilité pour une valeur $V_k$ du paramètre k impactant la mousse (et pour des valeurs optimales des autres paramètres $V_j$, j étant différent de k) et où $M_{mod}^{opt} = M_{mod}(V_k^{opt})$ est la réduction de mobilité obtenue pour la valeur optimale $V_k^{opt}$ du paramètre $V_k$. Le procédé selon l'invention consiste ainsi, pour chaque paramètre $V_k$ impactant la mousse, à déterminer les facteurs $M_{mod}(V_k)$ *pour* diverses valeurs de ce paramètre, ainsi que $M_{mod}^{opt}$, puis à déterminer, à partir de ces facteurs, les constantes de la fonction d'interpolation $F_k$ considérée.

Selon un mode de mise en oeuvre de l'invention dans lequel la fonctionnelle *FM* définie dans l'équation (2) fait intervenir les fonctions d'interpolation $F_1$, $F_2$, $F_3$ et $F_4$ définies aux équations (4') à (4), la détermination du modèle de déplacement de la mousse peut avoir besoin de calibrer les 8 constantes suivantes : $C_s^{w-ref}$, $e_s$, $f_w$, $S_w^*$, $S_o^*$, $e_o$, $N_c^{ref}$, $e_c$.

Selon l'invention, la détermination des constantes des fonctions d'interpolation $F_k$ intervenant dans l'équation (2) est réalisée via une calibration fonction d'interpolation par fonction d'interpolation (et non pas globalement, pour l'ensemble des fonctions), à partir de mesures expérimentales relatives à chacune des fonctions d'interpolation, réalisées dans les conditions optimales établies pour les autres fonctions d'interpolation.

De manière classique, le simulateur d'écoulement selon l'invention requiert en entrée une représentation maillée représentative du gisement, aussi appelée maillage du gisement, ou encore modèle de réservoir. Il s'agit d'une sorte de maquette du sous-sol construite dans le but de décrire aussi précisément que possible la structure, les propriétés pétrophysiques et les propriétés des fluides du gisement étudié. Cette maquette est généralement représentée sur un ordinateur, et consiste en un maillage ou grille, chacune des mailles de cette grille comportant une ou plusieurs valeurs de propriétés relatives au réservoir étudié (telles que porosité, perméabilité, saturation, faciès géologique, pression etc). Un modèle de réservoir se doit de vérifier autant que possible les propriétés collectées sur le terrain : les données de diagraphie mesurées le long des puits, les mesures réalisées sur des échantillons de roche prélevés par exemple par carottage, les données déduites de campagnes d'acquisition sismique, les données de production comme les débits d'huile, d'eau, les variations de pression etc. Le spécialiste en simulation de réservoir a pleine connaissance de méthodes pour construire une telle représentation maillée d'un réservoir géologique. A noter que le modèle de réservoir peut se confondre avec le modèle géologique lorsque la puissance informatique est suffisante pour permettre des calculs numériques de simulation d'écoulement sur une grille à mailles fines. Dans les autres cas, le spécialiste pourra avoir recours à une technique d'« upscaling » (mise à l'échelle) afin de passer d'un modèle aux mailles fines (le modèle géologique) à un modèle aux mailles plus grossières (le modèle de réservoir). Cette étape d'upscaling peut être réalisée par exemple à l'aide du logiciel CobraFlow™ (IFP Energies nouvelles, France).

Le procédé selon l'invention comporte au moins les étapes suivantes :

**1. Mesures en laboratoire relatives à une fonction d'interpolation**

**1.1. Définition de valeurs du paramètre relatif à la fonction d'interpolation**

**1.2. Injections avec/sans mousse et mesures de pertes de charge**

**1.3. Détermination d'une valeur optimale de paramètre**

**2. Détermination d'un facteur de réduction de mobilité optimal relatif aux mesures de laboratoires dans des conditions optimales**

**3. Détermination du modèle de déplacement de mousse**

**3.1. Détermination du facteur de réduction de mobilité optimal**

**3.2. Calibration des constantes des fonctions d'interpolation**

**4. Détermination d'un indice de productivité corrigé des effets rhéofluidifiants de la mousse**

**4.1 Détermination d'un indice de productivité sous l'hypothèse d'un fluide newtonien**

**4.2 Correction des effets rhéofluidifiants de la mousse**

**5. Exploitation des hydrocarbures du gisement**

L'étape 1 est appliquée au moins pour la fonction d'interpolation $F_4$ relative au débit d'injection et peut être répétée pour chacune des fonctions d'interpolation du modèle de déplacement de la mousse. L'étape 4 est appliquée pour au moins un des puits injecteurs traversant le gisement.

Les différentes étapes du procédé selon l'invention sont détaillées ci-après.

**1) Mesures en laboratoire relatives à une fonction d'interpolation**

La première étape du procédé selon l'invention est décrite ci-après dans son cas le plus général, c'est-à-dire pour toute fonction d'interpolation $F_k$. Toutefois, selon l'invention, cette étape est au moins appliquée pour la fonction d'interpolation $F_4$, qui dépend du paramètre $V_4$ correspondant au débit d'injection du gaz.

Selon un mode de mise en oeuvre de l'invention, cette étape peut être répétée pour chacune des fonctions d'interpolation intervenant dans le modèle de déplacement de la mousse défini selon les équations (1) et (2).

De manière générale, cette étape est appliquée à chaque fonction d'interpolation indépendamment l'une de l'autre. Dans un premier temps, on définit une pluralité de valeurs du paramètre relatif à la fonction d'interpolation considérée, puis on réalise une injection, dans ledit échantillon, du gaz sous forme non moussante et du gaz sous forme de mousse selon les valeurs du paramètre relatif à la fonction d'interpolation considérée, et on mesure respectivement une perte de charge avec mousse et une perte de charge sans mousse pour chacune des valeurs du paramètre relatif à cette fonction. Cette étape est détaillée ci-après pour une fonction d'interpolation $F_k$ donnée, et elle est au moins appliquée pour la fonction d'interpolation $F_4$ relative au débit d'injection.

**1.1. Définition de valeurs du paramètre relatif à une fonction d'interpolation**

Au cours de cette sous-étape, il s'agit de définir une pluralité de valeurs $V_{k,i}$ (avec i compris entre 1 et I, et I > 1) du paramètre caractéristique $V_k$ de la fonction d'interpolation $F_k$ considérée.

Selon un mode de mise en oeuvre de l'invention, il peut s'agir de définir une gamme de valeurs de ce paramètre et un pas d'échantillonnage de cette gamme.

Selon un mode de mise en oeuvre de l'invention, la pluralité de valeurs du paramètre $V_k$ relatif à la fonction d'interpolation $F_k$ considérée peuvent être définies parmi les valeurs possibles ou réalistes du paramètre considéré (par exemple, une concentration massique d'agent moussant inférieure à 1% dans tous les cas) et de façon à échantillonner de façon ad hoc la courbe représentative de la fonction d'interpolation considérée (une fonction d'interpolation ayant un comportement linéaire n'a pas besoin d'un nombre élevé de mesures, contrairement à d'autres types de fonction). Le spécialiste en récupération assistée par injection de mousse a parfaite connaissance de la façon de définir une pluralité de valeurs ad hoc des paramètres de chacune des fonctions d'interpolation $F_k$.

Selon l'invention, pour les mesures relatives à la fonction d'interpolation $F_4$ (cf. équation (4)), on choisit par exemple un débit d'injection sur carotte compris entre 10 et 40 cm$^3$/h, avec un pas de 10 cm$^3$/h.

**1.2. Injections avec/sans mousse et mesures de pertes de charge**

Au cours de cette sous-étape, on réalise au moins deux séries d'expériences sur au moins un échantillon de la formation souterraine pour la fonction d'interpolation $F_k$ considérée :

- injection de gaz sous forme non moussante (plus précisément une co-injection d'eau et de gaz sous forme non moussante) dans l'échantillon considéré pour chacune des valeurs $V_{k,i}$ du paramètre $V_k$ relatif à la fonction $F_k$ considérée. Les débits de gaz et d'eau adoptés pour chacune de ces co-injections sont les mêmes que les débits de gaz et d'eau injectés sous forme de mousse dans les essais qui suivent ces co-injections. Selon l'invention, dans le cas de la fonction d'interpolation $F_4$ de l'équation (4), on fait uniquement varier le débit dans l'échantillon considéré, les paramètres des autres fonctions d'interpolation $F_1$, $F_2$, $F_3$ (par exemple, la concentration en agent moussant, la qualité de la mousse et la saturation en huile) étant fixés. Au cours de chacune des expériences de cette première série, on mesure une perte de charge (c'est-à-dire une différence de pression), que l'on note $\Delta P_{k,i}^{NOFO}$, pour chaque valeur $V_{k,i}$ ;

- injection de mousse : on répète la même expérience, pour les mêmes valeurs du paramètre considéré (et au moins, selon l'invention, pour les mêmes valeurs du débit d'injection), mais en injectant cette fois l'eau et le gaz sous forme de mousse. Au cours de chacune des expériences de cette deuxième série, on mesure une perte de charge (c'est-à-dire une différence de pression), que l'on note $\Delta P_{k,i}^{FO}$ , pour chaque valeur $V_{k,i}$ ;

Selon un mode de mise en oeuvre de l'invention, les injections de gaz sous forme non moussante et sous forme de mousse sont effectuées sur des échantillons de la formation initialement saturés d'une phase liquide (telle que de l'eau et/ou de l'huile), celle-ci pouvant être mobile ou résiduelle selon l'historique de la carotte et les objectifs de mesure (contrôle de mobilité du gaz en injection secondaire ou tertiaire, après injection d'eau). Les déplacements étudiés sont alors des processus de drainage dans lesquels la saturation de la phase gaz croît dans tous les cas.

Selon une variante de mise en oeuvre de l'invention, on peut mesurer, en sus des pertes de charge, les productions de phase liquide (eau et/ou huile) et de gaz, et éventuellement, les profils de saturation en gaz durant la période transitoire du déplacement et dans l'état stationnaire. Ces mesures facultatives permettent de valider le modèle une fois les fonctions d'interpolation $F_k$ calibrées.

Selon une mise en oeuvre de l'invention, l'agent moussant choisi pour la mise en oeuvre de l'invention est dissout dans une solution aqueuse à une concentration fixée, de l'ordre du g/l par exemple. La solution ainsi préparée et le gaz (par exemple du $CO_2$) sont injectés dans l'échantillon de roche. Selon l'invention Les injections sont réalisées au moins pour différentes valeurs du débit d'injection.

Selon une mise en oeuvre de l'invention, on peut utiliser le montage expérimental décrit dans le document (Beunat et al, 2019). Ce montage expérimental a été conçu pour réaliser des mesures sur carottes. Il comprend trois pompes Vindum à double-pistons utilisées pour l'injection des fluides dans le massif poreux à des débits constants. La première pompe injecte des liquides (saumure ou solution tensio-active), la seconde permet de remplir le milieu poreux d'huile et la troisième permet d'injecter le gaz en utilisant une cellule de transfert. Le débit de gaz en sortie est mesuré à l'aide d'un débitmètre gaz. Selon cette mise en oeuvre de l'invention, l'échantillon est placé dans une cellule verticale. Les fluides sont ensuite introduits dans l'échantillon par le sommet. Le débit des fluides dans l'échantillon est maintenu par pression de confinement. La pression de pore quant à elle est contrôlée à l'aide d'un régulateur de contre-pression connecté à la sortie de la cellule. Des transducteurs de différentiels de pression permettent de mesurer des niveaux allant jusqu'à 20 bar. Selon cette mise en oeuvre de l'invention, la co-injection de solution tensio-active et de gaz est réalisée au niveau de la jonction en T à la tête d'injection. Dans cette configuration, la mousse se forme in-situ. Un tel montage permet de contrôler la qualité $f_g$ de la mousse, via le contrôle des débits des phases eau et gaz. Ainsi le montage expérimental selon ce mode de mise en oeuvre de l'invention permet de réaliser des mesures à qualité constante (en régime stabilisé). Il est recommandé de travailler à qualité constante pour étudier les effets de vitesse sur la viscosité apparente d'une mousse car de faibles variations en qualité de la mousse peuvent avoir un fort impact sur l'estimation de la viscosité apparente (cf. le document (Gassara et al, 2017)).

### 1.3. Détermination d'une valeur optimale de paramètre

Au cours de cette sous-étape, il s'agit de déterminer la valeur $V_k^{opt}$ , que l'on nommera valeur optimale dans la suite, maximisant le rapport entre les pertes de charge sans mousse $\Delta P_{k,i}^{NOFO}$ et les pertes de charge avec mousse $\Delta P_{k,i}^{FO}$ relatives à la fonction d'interpolation $F_k$ considérée et mesurées au cours de la sous-étape précédente. Ainsi, si on note $M_{lab}^{k,i}$ le rapport des pertes de charge mesurées en présence et en l'absence de mousse pour la valeur $V_{k,i}$

$$M_{lab}^{k,i} = \frac{\Delta P_{k,i}^{FO}}{\Delta P_{k,i}^{NOFO}} = \frac{k_{rg}\left(S_{g(k,i)}^{NOFO}\right)}{k_{rg}^{FO}\left(S_{g(k,i)}^{FO}\right)},$$

du paramètre $V_k$, soit on peut alors définir la valeur optimale $V_k^{opt}$ , comme la valeur $V_{k,i}$ qui maximise $M_{lab}^{k,i}$ dont la valeur est alors notée comme suit :

$$M_{lab}^{k,iopt} = M_{lab}^{kopt} = \underset{i}{Max}\, M_{lab}^{k,i} \qquad (9)$$

Selon l'invention, l'étape 1 telle que décrite ci-dessus est appliquée au moins pour la fonction d'interpolation $F_4$ relative au débit d'injection. Selon un mode de mise en oeuvre de l'invention, l'étape 1 telle que décrite ci-dessus peut être répétée pour chacun des paramètres $V_k$ relatifs à chacune des fonctions d'interpolation $F_k$ prises en considération pour la mise en oeuvre du procédé selon l'invention. Ainsi à l'issue d'une telle répétition, on obtient une valeur optimale $V_k^{opt}$ pour chaque paramètre $V_k$.

Par la suite, on appelle « conditions optimales » l'ensemble des valeurs $V_k^{opt}$ déterminées à l'issue de l'étape 1, celle-ci étant le cas échéant répétée pour chacune des fonctions d'interpolation prises en considération pour la mise en oeuvre du procédé selon l'invention.

Selon une mise en oeuvre de l'invention selon laquelle le modèle de déplacement de la mousse peut faire intervenir uniquement la fonction d'interpolation $F_4$ telle que définie par l'équation (4) ci-dessus, les conditions optimales décrites ci-dessus correspondent à la valeur $V_{4,i}$ du paramètre $V_4$ maximisant le rapport des pertes de charge mesurées en présence et en l'absence de pertes de charge avec et sans mousse tel que décrit à l'étape 1.2.

**2. Détermination d'un facteur de réduction de mobilité optimal relatif aux mesures de laboratoires dans des conditions optimales**

Selon une mise en oeuvre de l'invention selon laquelle le modèle de déplacement de la mousse fait intervenir au moins deux fonctions d'interpolation (autrement dit au moins une fonction d'interpolation en plus de la fonction d'interpolation $F_4$), cette étape consiste à réaliser des injections de gaz sous forme non moussante et de gaz sous forme de mousse, (de manière similaire à la sous-étape 1.2), mais cette fois dans les conditions dites "optimales" déterminées à l'issue de la sous-étape 1.3. Pour rappel, la sous-étape 1.3 est répétée le cas échéant pour chacune des fonctions d'interpolation prises en considération pour la définition du modèle de déplacement de la mousse. Plus précisément, on réalise les mesures suivantes :

- injection de gaz sous forme non moussante (plus précisément une co-injection d'eau et de gaz sous forme non moussante) dans l'échantillon considéré, cette injection étant réalisée dans les conditions optimales (définies par l'ensemble des valeurs optimales $V_k^{opt}$ déterminées pour chaque paramètre $V_k$ déterminées à l'issue de l'étape 1, et au moins pour le paramètre $V_4$). Au cours de cette première expérience, on mesure une perte de charge (c'est-à-dire une différence de pression), que l'on note $\Delta P_{opt}^{NOFO}$ par la suite ;

- injection de mousse (c'est-à-dire une injection de gaz et d'eau, avec une adjonction d'un agent moussant dans l'une des phases eau ou gaz) dans l'échantillon considéré, cette injection étant réalisée dans les conditions optimales (définies par l'ensemble des valeurs optimales $V_k^{opt}$ déterminées pour chaque paramètre $V_k$, et au moins pour le paramètre $V_4$) déterminées à l'issue de l'étape 1. Au cours de cette deuxième expérience, on mesure une perte de charge (c'est-à-dire une différence de pression), que l'on note $\Delta P_{opt}^{FO}$ par la suite.

Par la suite, on notera $M_{lab}^{opt}$ le facteur de réduction de mobilité, dit "optimal", relatif aux mesures de laboratoire dans les conditions dites "optimales", défini par une formule du type :

$$M_{lab}^{opt} = \frac{\Delta P_{opt}^{FO}}{\Delta P_{opt}^{NOFO}} = \frac{k_{rg}\left(S_{g,opt}^{NOFO}\right)}{k_{rg}^{FO}\left(S_{g,opt}^{FO}\right)} \qquad (10).$$

Selon une mise en oeuvre de l'invention selon laquelle le modèle de déplacement de la mousse fait intervenir uniquement la fonction d'interpolation $F_4$ telle que définie par l'équation (4) ci-dessus, le facteur de réduction de mobilité (dit "optimal) relatif aux mesures de laboratoire dans les conditions optimales correspond à la valeur maximale du rapport des pertes de charge mesurées en présence et en l'absence de pertes de charge avec et sans mousse tel que décrit à l'étape 1.2. Aucune mesure supplémentaire n'est donc requise pour cette mise en oeuvre de l'invention.

**3) Détermination des paramètres du modèle de déplacement de la mousse**

Au cours de cette étape, il s'agit de déterminer les paramètres d'un modèle de déplacement de la mousse fonction d'au moins le facteur de réduction de mobilité du gaz "optimal" et d'au moins la fonction d'interpolation $F_4$ relative au débit d'injection (cf. les équations (1), (2), (3) et (4) décrites ci-dessus). Cette étape est toutefois décrite dans son cas le plus général, pour une fonction $F_k$ quelconque.

**3.1) Détermination du facteur de réduction de mobilité optimal**

Au cours de cette sous-étape, il s'agit, à partir des mesures de perte de charge réalisées dans les conditions optimales, de mesures de perméabilités relatives conventionnelles au gaz sous forme non moussante et de mesures de perméabilités relatives conventionnelles à la phase aqueuse, de déterminer un facteur de réduction de mobilité optimal, c'est-à-dire le facteur de réduction des perméabilités relatives au gaz lorsque, présent à une saturation donnée au sein du milieu poreux, il circule sous forme de mousse ou sous forme de phase continue (en présence d'eau).

Selon un mode de mise en oeuvre de l'invention, on peut déterminer le facteur de réduction de mobilité optimal selon au moins les étapes suivantes :

- à partir des perméabilités relatives conventionnelles au gaz $k_{rg}$ et à la phase aqueuse $k_{rw}$, on calcule la saturation en gaz en régime permanent d'écoulement de gaz et d'eau non moussante $S_g^{NOFO}$ selon une formule du type :

$$S_g^{NOFO} = \left(\frac{k_{rg}}{k_{rw}}\right)^{-1} \left(\frac{f_g}{1-f_g}\frac{\mu_g}{\mu_w}\right) \qquad (11)$$

où $f_g$ est le débit fractionnaire de gaz (rapport du débit de gaz au débit total), $\mu_g$ et $\mu_w$ sont respectivement la viscosité du gaz et de l'eau ;

- à partir du rapport de pertes de charge mesurées dans les conditions optimales telles que définies à l'issue de l'étape 1 (l'étape 1 pouvant être répétée le cas échéant pour chacune des fonctions d'interpolation $F_k$ considérées), de la saturation en gaz en régime permanent d'écoulement de gaz et d'eau non moussante $S_g^{NOFO}$, on calcule la saturation en gaz en présence de mousse $S_g^{FO}$ selon une formule du type :

$$S_{g,opt}^{FO} = 1 - \left(k_{rw}\right)^{-1} \left\{ \frac{k_{rw}(S_w^{NOFO} = 1 - S_g^{NOFO})}{M_{lab}^{opt}} \right\} \qquad (12)$$

Cette relation découle de l'hypothèse connue d'invariance des fonctions de perméabilité relative à l'eau s'écoulant sous forme de films de mousse ou sous forme continue classique.

- à partir de la saturation en gaz en régime permanent d'écoulement de gaz et d'eau non moussante $S_g^{NOFO}$, de la saturation en gaz en présence de mousse $S_{g,opt}^{FO}$ dans les conditions optimales, du facteur $M_{lab}^{opt}$ déterminé dans les conditions optimales (cf. étape 2), on détermine le facteur de réduction de mobilité $M_{mod}^{opt}$ selon une formule du type :

$$M_{mod}^{opt} = M_{lab}^{opt} \frac{k_{rg}\left(S_{g,opt}^{FO}\right)}{k_{rg}\left(S_{g,opt}^{NOFO}\right)} \qquad (13)$$

**3.2) Calibration des constantes des fonctions d'interpolation**

Au cours de cette sous-étape, on calibre les constantes de chacune des fonctions d'interpolation $F_k$ considérées, et au moins les constantes relatives à la fonction d'interpolation $F_4$ relative au débit d'injection, à partir du facteur de réduction de mobilité optimal $M_{\text{mod}}^{opt}$, des mesures de perte de charge relatives à la fonction d'interpolation considérée, des mesures de perméabilités relatives conventionnelles au gaz sous forme non moussante et des mesures de perméabilités relatives conventionnelles à la phase aqueuse.

Selon un mode de mise en oeuvre de l'invention, on peut appliquer préalablement la procédure décrite à la sous-étape 3.1aux rapports des pertes de charge $M_{lab}^{k,i}$ mesurées en présence et en l'absence de mousse pour les différentes valeurs $V_{k,i}$ du paramètre $V_k$. Ainsi, on détermine des facteurs de réduction de mobilité $M_{\text{mod}}^{k,i}$ relatifs aux valeurs $V_{k,i}$ du paramètre $V_k$ selon une formule du type :

$$M_{\text{mod}}^{k,i} = M_{lab}^{k,i} \frac{k_{rg}\left(S_{g(k,i)}^{FO}\right)}{k_{rg}\left(S_{g(k,i)}^{NOFO}\right)} \qquad (14),$$

où la saturation en gaz en présence de mousse $S_{g(k,i)}^{FO}$ pour la valeurs $V_{k,i}$ du paramètre $V_k$ est obtenue selon une formule du type :

$$S_{g(k,i)}^{FO} = 1 - \left(k_{rw}\right)^{-1} \left\{ \frac{k_{rw}\left(S_{w(k,i)}^{NOFO} = 1 - S_{g(k,i)}^{NOFO}\right)}{M_{lab}^{k,i}} \right\} \qquad (15)$$

Avantageusement, cette opération est répétée pour chacune des fonctions d'interpolation $F_k$. Puis on calibre les constantes de chacune des fonctions d'interpolation $F_k$ considérées, à partir du facteur de réduction de mobilité optimal $M_{\text{mod}}^{opt}$ et des valeurs des facteurs de réduction de mobilité $M_{\text{mod}}^{k,i}$ relatifs à chaque fonction d'interpolation déterminés tel que décrit ci-dessus.

Selon l'invention, on calibre au moins les constantes de la fonction $F_4$. Notamment on détermine une valeur de l'exposant $e_c$ qui ajuste au plus près les valeurs de $M_{\text{mod}}^{4,i}$ correspondant aux valeurs $V_{4,i}$ du paramètre étudié (débit d'injection), ce qui se formule comme suit :

$$F_4(V_{4,i}) = \left(\frac{N_c^*}{Max(N_{c,i}, N_c^*)}\right)^{e_c} = \frac{M_{\text{mod}}^{4,i} - 1}{M_{\text{mod}}^{opt} - 1} \qquad (16)$$

Selon un mode de mise en oeuvre de l'invention, cette calibration, fonction d'interpolation par fonction d'interpolation, peut s'effectuer par une méthode des moindres carrés, comme par exemple une méthode inverse basée sur la minimisation itérative d'une fonction objectif. Le spécialiste a parfaite connaissance de telles méthodes. Avantageusement, la mise en oeuvre d'une méthode des moindres carrés, et en particulier la minimisation itérative d'une fonction objectif, est réalisée au moyen d'un ordinateur.

Selon un autre mode de mise en oeuvre de l'invention, on peut procéder à une telle calibration, fonction d'interpolation par fonction d'interpolation, de manière graphique. Le spécialiste a parfaite connaissance de telles méthodes de calibration de constantes d'une fonction à partir d'une série de valeurs de ladite fonction.

Ainsi, à l'issue de cette étape, on dispose d'un modèle de déplacement de la mousse calibré au moins pour la fonction d'interpolation relative au débit d'injection (fonction $F_4$), et apte à être utilisé par un simulateur d'écoulement ad hoc.

**4) Détermination d'un indice de productivité corrigé des effets rhéofluidifiants de la mousse**

Au cours de cette étape, il s'agit de déterminer un indice de productivité tenant compte des propriétés rhéofluidifiantes de la mousse, et ce pour chacune des mailles de la représentation maillée du gisement traversées par le puits injecteur. Avantageusement, cette étape est en outre répétée pour chacun des puits injecteurs du gisement.

Par la suite, on appelle "maille puits" une maille de la représentation maillée du gisement traversée par un puits injecteur. En simulation d'écoulement dans un gisement, les dimensions d'une maille puits sont de l'ordre de 50 m x 50 m dans un plan horizontal (et de l'ordre de 10 m dans un plan vertical), ce qui est bien supérieur au rayon réel d'un puits (de l'ordre de la dizaine de centimètres). Dans les calculs de l'indice de productivité d'une maille puits selon l'art antérieur, il est supposé que la viscosité du fluide injecté est constante sur la maille puits (hypothèse d'un fluide newtonien), ce qui n'est pas vrai pour des fluides rhéofluidifiants tels que la mousse. Une telle approximation conduit à des erreurs notamment de l'estimation des pressions dans le puits.

La présente étape est appliquée pour chacune des mailles de la représentation maillée du gisement traversées par un puits injecteur, ou autrement dit, pour chaque maille puits. Pour une maille puits donnée, la présente étape consiste à déterminer un premier indice de productivité pour la maille puits en considérant le fluide injecté comme un fluide newtonien, puis à appliquer un facteur correctif à ce premier indice de productivité, de manière déterminer un deuxième indice de productivité tenant compte des propriétés rhéofluidifiantes de la mousse. Selon l'invention, le facteur correctif est fonction d'au moins une caractéristique du fluide injecté, c'est-à-dire de la solution aqueuse comprenant le gaz sous forme de mousse. Avantageusement, cette étape est répétée pour chaque puits injecteur du gisement.

**4.1) Détermination d'un indice de productivité sous l'hypothèse d'un fluide newtonien**

Selon une première variante de l'invention, on utilise la formule classique de Peaceman (cf. le document (Peaceman, 1978)) pour déterminer un indice de productivité dans la maille puits en supposant que le fluide injecté dans le puits injecteur est un fluide newtonien. Cette formule peut s'écrire sous la forme :

$$IP_0 = \frac{2\pi hk}{\ln\left(\frac{r'_0}{r_w}\right)} \qquad (17)$$

où $r_w$ désigne le rayon (réel) du puits, $h$ la hauteur de la maille, $k$ la perméabilité du milieu poreux formant le gisement, et où $r'_0$ est le rayon équivalent de la maille puits dans une représentation maillée à géométrie radiale dudit gisement (autrement dit, il s'agit du rayon qui serait celui de la maille puits si on considérait un maillage à géométrie radiale au lieu d'un maillage cartésien ; ce rayon est aussi appelé rayon de drainage dans le domaine). De manière physique, cet indice de productivité est défini, à la viscosité $\mu$ du fluide près, comme le facteur de proportionnalité entre le débit du puits Q et la différence de pression entre la pression de la maille puits $P_0$ et la pression en fond de puits $P_f$. En d'autres termes, il s'agit du facteur qui permet de calculer d'identifier la pression $P_0$ de la maille puits à partir de la pression en fond de puits $P_f$ selon la formule :

$$Q = IP_0/(P_0 - P_f) \qquad (17')$$

En pratique, un simulateur d'écoulement dans un gisement utilise les formules (17) et (17') pour déterminer la pression $P_0$ de la maille puits, à partir du débit Q, de la pression en fond de puits $P_f$, de la hauteur h, du rayon réel $r_w$ du puits et du rayons équivalent $r'_0$.

De manière générale, le document (Peaceman, 1978) définit un rayon équivalent $r'_0$ tel que l'évolution de la pression P en fonction de la distance radiale r s'exprime :

$$P(r) = P_0 + \frac{\mu Q}{2\pi hk} \ln\left(\frac{r}{r'_0}\right) \text{ avec } P(r'_0) = P_0$$

où $P_0$ désigne la pression assignée à la maille puits, Q est le débit d'injection, et $\mu$ est la viscosité du fluide injecté.

Selon une mise en oeuvre de l'invention, dans le cas d'un maillage cartésien ayant des mailles de dimensions $\Delta$x et $\Delta$y dans un plan horizontal, on peut déterminer le rayon équivalent $r'_0$ selon la formule suivante :

$$r'_0 = 0.14\sqrt{\Delta\mathrm{x}^2 + \Delta\mathrm{y}^2}$$

Selon une mise en oeuvre de l'invention, dans le cas d'un maillage cartésien (2D ou 3D) formé de mailles carrées et dans le cas d'un schéma numérique à 5 points, $r'_0$ peut s'écrire $r'_0 = e^{-\frac{\pi}{2}}\Delta x,$ où $\Delta$x est le pas d'espace du maillage régulier dans un plan horizontal.

Selon une mise en oeuvre de l'invention, dans le cas d'un maillage cartésien (2D ou 3D) formé de mailles carrées et dans le cas d'un schéma à 9 points, $r'_0$ peut s'écrire $r'_0 = a\,\Delta x,$ où $\Delta$x est le pas d'espace du maillage régulier dans un plan horizontal et *a* est un nombre qui peut se calculer selon l'aire de la section de passage des liaisons diagonales. Par exemple, si le côté de la section de passage des liaisons diagonales est égal à la diagonale de la maille carrée de côté $\Delta$x, *a* peut se calculer comme $a = 2^{\frac{1}{4}}e^{-\frac{\pi}{4}} \approx 0.542.$

Selon une deuxième variante de l'invention, on peut déterminer l'indice de productivité dans la maille puits par une prise de moyenne de la pression sur la maille puits en écoulement radial, tel que décrit dans les documents (van Poolen et al. 1968 ; van Poolen et al., 1970).

## 4.2) Correction des effets rhéofluidifiants de la mousse

Selon l'invention, on détermine un facteur correctif à appliquer à l'indice de productivité déterminé à la sous-étape ci-dessus (c'est-à-dire en considérant le fluide injecté comme un fluide Newtonien), de manière à tenir compte des propriétés rhéofluidifiantes de la mousse. Autrement dit, on détermine un facteur correctif $\alpha$ tel que l'indice de productivité IP pour une mousse rhéofluidifiante puisse s'écrire :

$$IP = \alpha.IP_0 \qquad\qquad (18)$$

où $IP_0$ est l'indice de productivité déterminé à la sous-étape précédente, et pour lequel le fluide injecté est considéré comme un fluide Newtonien, et $\alpha$ est un facteur correctif qui est fonction d'au moins une caractéristique du fluide injecté dans le puits injecteur (c'est-à-dire la solution aqueuse comprenant un gaz sous forme de mousse).

Selon une mise en oeuvre de l'invention, l'équation (18) peut s'écrire :

$$IP = IP_0\,\frac{1+\frac{\lambda_g(r_w)}{\lambda_w(r_w)}FM(r_w)}{1+\frac{\lambda_g}{\lambda_w}FM} \qquad\qquad (19)$$

où $\lambda_g$ et $\lambda_w$ désignent respectivement une mobilité associée à la phase gaz (et pouvant s'exprimer comme le rapport de la perméabilité au gaz sur la viscosité du gaz) et une mobilité associée à la phase eau (et pouvant s'exprimer comme le rapport de la perméabilité à l'eau sur la viscosité de l'eau), $r_w$ représente le rayon (réel) du puits, $FM(r_w)$ représente la fonctionnelle de réduction de mobilité du gaz en proche puits calibrée tel que décrit à l'étape 2 ci-dessus et $\overline{\frac{\lambda_g}{\lambda_w}FM}$ la moyenne du produit de la fonctionnelle de réduction de mobilité par le rapport des mobilités associées à la phase gaz et à la phase aqueuse, la moyenne étant estimée dans la maille puits (et que l'on peut par exemple estimer par intégration entre le rayon du puits et la maille puits). Ainsi, le facteur correctif selon cette mise en oeuvre de l'invention permet d'intégrer la variabilité de la viscosité du fluide injecté dans moyenne réalisée dans la maille puits, ce qui permet de calculer correctement l'indice de productivité du puits injecteur. En effet, l'indice de productivité corrigé des effets rhéofluidifiants dépend ici des valeurs de la fonctionnelle FM et des mobilités des fluides injectés.

Selon une mise en oeuvre de l'invention selon laquelle on suppose que les mobilités $\lambda_g$ et $\lambda_w$ sont directement contrôlées par la qualité de la mousse $f_g$, laquelle est constante du fait que les mesures de laboratoire ont été réalisées à débit d'injection constant, on peut déterminer un indice de productivité IP corrigé des propriétés rhéofluidifiantes de la mousse selon une formule du type :

$$IP = IP_0 \frac{1+\frac{fg}{1-fg}}{1+\frac{\lambda_g}{\lambda_w}\overline{FM}} \qquad (20)$$

Selon une autre mise en oeuvre de l'invention selon laquelle on suppose que les $\overline{FM}$ « 1 pour $r_w \leq r \leq r'_0$, on peut déterminer un indice de productivité IP corrigé des propriétés rhéofluidifiantes de la mousse selon une formule du type :

$$IP = IP_0 \left(1 + \frac{fg}{1-fg}\right) \qquad (21)$$

Selon une variante de mise en oeuvre de l'invention, on peut corriger en outre l'indice de productivité déterminé selon l'une quelconque des mises en oeuvre décrites ci-dessus au moyen d'une simulation numérique d'écoulement réalisée sur une représentation maillée dont la dimension des mailles au moins autour du puits est déterminée de manière à reproduire les vitesses d'écoulement locales au puits. Plus précisément, au moyen d'une simulation numérique d'écoulement réalisée sur une représentation maillée dont la dimension des mailles au moins autour du puits est déterminée de manière à reproduire les vitesses d'écoulement locales au puits, on détermine un indice de productivité au puits de référence et on applique une correction supplémentaire à l'indice de productivité déterminé tel que décrit ci-dessus fonction de l'indice de productivité prédit numériquement. Selon une mise en oeuvre de l'invention, on utilise un multiplicateur pour corriger numériquement l'indice de productivité déterminé tel que décrit ci-dessus.

**5) Exploitation des hydrocarbures**

Au cours de cette étape, il s'agit de déterminer au moins un schéma d'exploitation des hydrocarbures contenus dans le gisement. De manière générale, un schéma d'exploitation comprend un nombre, une géométrie et une implantation (position et espacement) des puits injecteurs et producteurs. Dans le cas d'une récupération assistée des hydrocarbures par injection d'un gaz sous forme de mousse, le type de gaz injecté dans la formation étudiée et/ou le type d'agent moussant adjoint à ce gaz, ou encore la quantité d'agent moussant peuvent être précisés. Un schéma d'exploitation d'un réservoir d'hydrocarbures doit par exemple permettre un fort taux de récupération des hydrocarbures piégés dans le réservoir géologique, sur une longue durée d'exploitation, et nécessiter un nombre de puits injecteurs et/ou producteurs limité. Ainsi, le spécialiste prédéfinit des critères d'évaluation selon lesquels un schéma d'exploitation des hydrocarbures contenus dans le gisement est considéré comme suffisamment performant pour être mis en oeuvre sur le gisement étudié.

Selon l'invention, la détermination du schéma d'exploitation des hydrocarbures de la formation est réalisée à l'aide d'un simulateur d'écoulement, du modèle de déplacement de la mousse déterminé tel que décrit aux étapes 1 à 3, et des indices de productivité déterminés à l'étape 4. Un exemple de simulateur d'écoulement (aussi appelé simulateur de réservoir) permettant la prise en compte d'un modèle de déplacement de la mousse est le logiciel PumaFlow® (IFP Energies nouvelles, France). Selon l'invention, à tout instant t de la simulation, le simulateur d'écoulement résout l'ensemble des équations d'écoulement propres à chaque maille de la représentation maillée du gisement et délivre des valeurs solutions des inconnues (saturations, pressions, concentrations, température,...) prédites à cet instant t. De cette résolution, découle la connaissance des quantités d'huile produites et de l'état du gisement (distribution des pressions, saturations, etc...) à l'instant considéré. Selon une mise en oeuvre de l'invention, on peut définir différents schémas d'exploitation des hydrocarbures du gisement étudié et on estime, à l'aide du simulateur d'écoulement intégrant le modèle de déplacement de la mousse déterminé à l'issue de l'étape 3 et les indices de productivité déterminés à l'étape 4, par exemple la quantité d'hydrocarbures produit selon chacun des différents schémas d'exploitation, la courbe représentative de l'évolution de la production dans le temps au niveau de chacun des puits producteur etc.

Puis, une fois le schéma d'exploitation déterminé, les hydrocarbures piégés dans le réservoir pétrolier sont exploités en fonction de ce schéma d'exploitation, notamment au moins en forant les puits injecteurs et producteurs du schéma d'exploitation ainsi déterminés, de manière à produire les hydrocarbures, et en installant les infrastructures de production nécessaires au développement de ce gisement. L'exploitation des hydrocarbures piégés dans le réservoir est en outre réalisée en injectant une mousse ayant des propriétés (type d'agent moussant, concentration, qualité de la mousse par exemple) considérées comme les plus favorables à la récupération des hydrocarbures piégés dans le gisement, après simulation d'écoulement pour différentes valeurs de ces propriétés.

Il est bien entendu que le schéma d'exploitation peut être évolutif sur la durée d'une exploitation des hydrocarbures d'un gisement, en fonction des connaissances relatives au gisement acquises pendant l'exploitation, des améliorations dans les différents domaines techniques intervenant lors d'une exploitation d'un gisement d'hydrocarbures (améliorations dans le domaine du forage, de la récupération assistée par exemple).

Il est bien clair que le procédé selon l'invention comprend des étapes mises en oeuvre au moyen d'un équipement (par exemple un poste de travail informatique) comprenant des moyens de traitement des données (un processeur) et des moyens de stockage de données (une mémoire, en particulier un disque dur), ainsi qu'une interface d'entrée et de sortie pour saisir des données et restituer les résultats du procédé.

En particulier, les moyens de traitement de données sont configurés pour mettre en oeuvre la simulation des écoulements au sein du gisement étudié, au moyen d'un simulateur d'écoulement selon l'invention tel que décrit ci-dessus.

En outre, l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé tel que décrit précédemment, lorsque ledit programme est exécuté sur un ordinateur.

**Exemples**

Les caractéristiques et avantages du procédé selon l'invention apparaîtront plus clairement à la lecture de l'exemple d'application ci-après.

Le gisement considéré pour cet exemple d'application est situé en Afrique du Nord. Ses principales caractéristiques, notamment pétrophysiques, sont données dans le Tableau 1. Après caractérisation pétrophysique, il apparait que ce gisement peut être modélisé par une distribution homogène et isotrope de ses propriétés d'écoulement (porosité et perméabilité notamment).

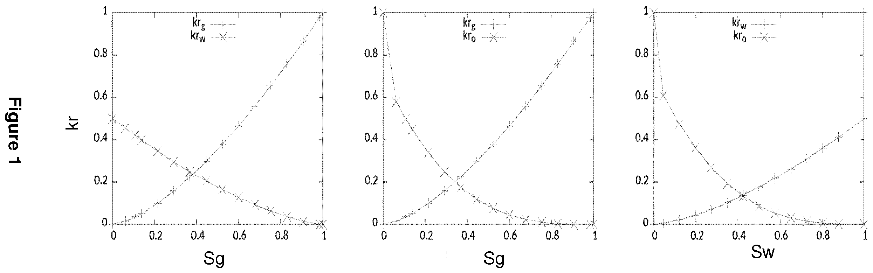

Les propriétés thermodynamiques des fluides en place sont données en Tableau 2. Le système fluides-roche consiste en un système huile-eau sans gaz présent dans les conditions du réservoir, le gisement se situant à tout moment à des pressions supérieures à la pression de bulle. Les courbes classiques de perméabilités kr relatives au gaz, à l'eau et à l'huile et relatives à ce gisement sont données en Figure 1.

Tableau 1

| | |
|---|---|
| Profondeur (m) | 3178 |
| Saturation en huile de la couche géologique perforée (-) | 0.2 |
| Porosité moyenne (-) | 0.08 |
| Perméabilité moyenne (mD) | 30 |
| Epaisseur (m) | 25 |
| Contact eau-huile (m) | 3380 |
| Température (°C) | 80 |
| Compressibilité de la roche (bar$^{-1}$) | 7E-05 |
| Pression initiale (bar) | 180 bar à 3200 m |

Tableau 2

| Fluide | Masse volumique (kg/m$^3$) | Viscosité (cP) |
|---|---|---|
| Huile | 865 | 1.6 |
| Eau | 1000 | 0.37 |
| Gaz | 0.987 | 0.0135 |

L'injection de mousse dans le gisement étudié est réalisée par co-injection in situ de $CO_2$ et d'une saumure contenant un surfactant.

Un puits injecteur et un puits producteur ont été forés dans ce gisement. Le puits injecteur, contrôlé par débit (150 m3/j) et qualité de mousse (80%) constants, est perforé entre 3178 et 3203 m.

Pour cet exemple, on définit un modèle de déplacement fonction d'un facteur de réduction de mobilité et d'une unique fonction d'interpolation, relative au débit d'injection (fonction $F_4$) On réalise une série de mesures telles que décrites à l'étape 1 sur un échantillon de roche provenant de ce gisement pour différentes valeurs du débit d'injection. Les résultats de ces mesures sont présentés dans le Tableau 3. Les mesures de perte de charge avec et sans mousse ont été réalisées à qualité constante et à débit d'injection (du $CO_2$ et de la saumure) variable. On peut constater que le rapport de perte de charge est maximum pour une valeur du débit d'injection valant 36.

Tableau 3

| Débit d'injection (cc/h) | 18 | 36 | 48 | 72 |
|---|---|---|---|---|
| Perte de charge avec mousse (bar) | 91 | 770 | 925 | 1170 |
| Perte de charge sans mousse (bar) | 25 | 63 | 89 | 136 |
| Rapport de perte de charge (-) | 3.6 | 12.2 | 10.4 | 8.6 |

Selon l'invention, à partir des mesures de pertes de charge avec et sans mousse réalisées pour différentes valeurs du débit d'injection et notamment à partir de la valeur du rapport de perte de charge maximale, on détermine les valeurs des constantes de la fonction d'interpolation $F_4$ relative au débit d'injection ainsi que la valeur du facteur de réduction de mobilité (dit optimal) tel que décrit à l'étape 3 ci-dessus. Les valeurs du facteur de réduction de mobilité $M_{\mathrm{mod}}^{opt}$, de la constante $e_c$ et la valeur de référence du nombre capillaire $N_c^*$ sont données dans le Tableau 4.

Tableau 4

| $M_{\mathrm{mod}}^{opt}$ | $e_c$ | $N_c^*$ |
|---|---|---|
| 22000 | 0.5 | 1E-12 |

Le modèle de déplacement de la mousse ainsi calibré peut ensuite être utilisé dans un simulateur d'écoulement en vue de déterminer un schéma d'exploitation de ce gisement.

A des fins illustratives, nous montrons ci-après que le procédé selon l'invention, par la correction de son indice de productivité pour tenir compte des propriétés rhéofluidifiantes de la mousse, permet une estimation fiable de la pression de fond de puits, même en utilisant un maillage de résolution classique. Dans le cas du gisement étudié, cela a un intérêt particulier puisque le seuil de sécurité pour ce gisement est de 500 bar, pression au-delà de laquelle il y a un risque de fracturation de la formation.

Ainsi, pour cet exemple, on souhaite estimer à quelle date une pression de fond limite de 500 bar peut être atteinte. Une période d'injection de 200 jours est étudiée, pour une concentration d'injection constante de 0.5 g/L d'agent moussant. On parle dans le domaine d'un test d'injection ("injection test" en anglais) pour ce type de modélisation.

On construit un premier maillage représentatif de la région du gisement autour du puits de résolution classique. Plus précisément, il s'agit d'un maillage radial 1D constitué de mailles concentriques, réparties selon une première couronne de 22 km de rayon dans laquelle les mailles sont espacées de 50 m entre elles, et selon une deuxième couronne s'étalant de 22 km à 100 km par rapport au centre du puits injecteur considéré, formée de mailles concentriques espacées de 100 m. De telles dimensions des mailles sont classiques en simulation de réservoir.

On construit également un deuxième maillage à géométrie radiale 1D, à très haute résolution. Plus précisément, ce maillage se compose de mailles concentriques, réparties selon une première couronne allant jusqu'à une distance radiale de 200 m par rapport au centre du puits et dans laquelle les mailles sont espacées de 10 cm, une deuxième couronne allant jusqu'à une distance radiale de 2000 m par rapport au centre du puits et dans laquelle les mailles sont espacées de 1 m, une troisième couronne allant jusqu'à une distance radiale de 20 km par rapport au centre du puits et dans laquelle les mailles sont espacées de 10m, puis une quatrième couronne s'étalant jusqu'à une distance radiale de 100 km par rapport au centre du puits et formée de mailles concentriques espacées de 100 m. Un tel maillage à très haute résolution ne peut être utilisé en routine, car les temps de calcul d'une simulation de réservoir sur ce type de maillage sont très élevés. En l'espèce, le temps de calcul pour modéliser les écoulements dans le deuxième maillage est 18 fois supérieur au temps de calcul pour modéliser les écoulements dans le premier maillage.

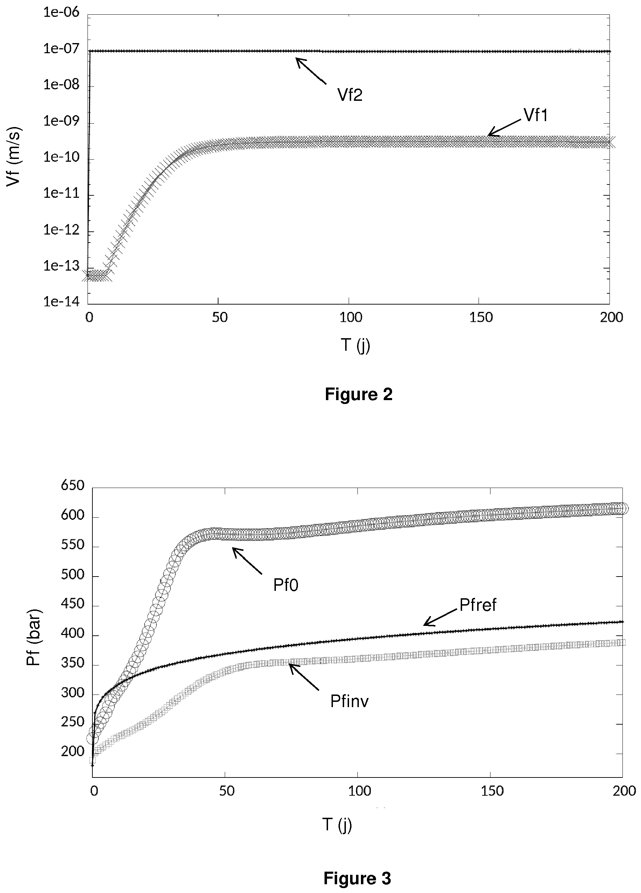

La Figure 2 présente une estimation de l'évolution dans le temps T des vitesses Vf d'écoulement de la phase gaz en fond de puits estimées sur le premier maillage (courbe Vf1) et sur le deuxième maillage (courbe Vf2). On peut observer que les valeurs des vitesses de la phase gaz en maille puits sont très différentes en fonction de la résolution du maillage, ce qui est dû aux propriétés rhéofluidifiantes de la mousse injectée.

Dans un premier temps, on simule l'évolution de la pression en fond du puits injecteur au moyen du simulateur d'écoulement PumaFlow® (IFP Energies Nouvelles), du premier maillage (de résolution classique) et d'un indice de productivité au puits injecteur déterminé en négligeant les propriétés rhéofluidiantes de la mousse. Plus précisément, on simule l'évolution de la pression en fond du puits injecteur en utilisant en entrée du simulateur d'écoulement un indice de productivité selon la formule classique de Peaceman. La courbe Pf0 en Figure 3 présente la courbe d'évolution dans le temps T de la pression en fond du puits injecteur Pf obtenue avec l'indice de productivité selon l'art antérieur.

Selon l'invention, on corrige l'indice de productivité déterminé selon l'art antérieur en utilisant la formule selon une mise en oeuvre de l'invention décrite en équation (21), soit :

$$IP = IP_0 \times (1 + \frac{f_g}{1 - f_g}) = IP_0(1 + \frac{0.8}{1 - 0.8}) = 5\, IP_0$$

Ainsi, le facteur correctif à appliquer à l'indice de productivité de Peaceman vaut donc 5 pour une qualité de la mousse de 80%. Puis, on simule l'évolution de la pression en fond du puits injecteur au moyen du simulateur d'écoulement PumaFlow® (IFP Energies Nouvelles), du premier maillage (de résolution classique) et de l'indice de productivité au puits injecteur corrigé pour tenir compte des propriétés rhéofluidiantes de la mousse. La Figure 3 présente la courbe Pfinv représentative de l'évolution dans le temps T de la pression en fond Pf de puits obtenue avec l'indice de productivité corrigé selon l'invention.

La Figure 3 présente en outre une courbe Pfref représentative de l'évolution dans le temps T de la pression Pf en fond de puits obtenue au moyen d'un indice de productivité selon l'art antérieur, mais déterminée pour le deuxième maillage, c'est-à-dire le maillage à résolution très fine. Cette courbe peut être considérée comme une courbe de référence, se rapprochant au maximum des conditions réelles in situ.

La comparaison des courbes Pfinv, Pf0 et Pfref de la Figure 3 permet de conclure que l'estimation de la pression de fond de puits selon l'invention permet de s'approcher de la pression de fond de puits de référence, même lorsqu'un maillage de résolution classique est utilisé, alors que l'écart entre la pression de fond prédite selon l'art antérieur est très éloignée de la pression de fond de référence. En particulier, se baser sur la courbe de pression de fond selon l'art antérieur (courbe Pf0 en Figure 3) conduirait à la conclusion que le seuil de sécurité (500 bar) relatif à la pression de fond limite est atteint au bout de 29 jours d'injection, alors que, d'après la courbe de pression de fond selon l'invention Pfinv, ce seuil n'est pas atteint pendant la période d'injection de 200 jours envisagée, ce qui est par ailleurs en accord avec la courbe de référence Pfref.

Ainsi, la correction de l'indice de productivité selon l'invention permet d'obtenir des prédictions d'écoulement fiables par simulation numérique d'écoulement, sans avoir à utiliser un maillage à haute résolution spatiale. Par conséquent, le procédé selon l'invention permet d'utiliser un maillage de résolution classique pour la simulation d'écoulement, et ainsi d'évaluer à moindre coût différents schémas d'exploitation possibles du gisement.

Par ailleurs, l'invention permet d'adapter le schéma d'exploitation du gisement en conséquence de l'injectivité plus élevée ainsi prédite, notamment au niveau des installations en surface (pompes, centrifugeuses, etc.).

**Revendications**

**1.** Procédé d'exploitation des hydrocarbures présents dans un gisement, au moyen d'une injection d'une solution aqueuse comprenant un gaz sous forme de mousse et d'un simulateur d'écoulement dans au moins un puits injecteur, ledit simulateur d'écoulement reposant sur un modèle de déplacement dudit gaz sous forme de mousse, ledit modèle de déplacement s'exprimant en fonction d'une fonctionnelle de réduction de mobilité dudit gaz, ladite fonctionnelle s'exprimant en fonction d'un facteur de réduction de mobilité dudit gaz et d'au moins une fonction d'interpolation dudit facteur de réduction de mobilité, ladite fonction d'interpolation étant fonction d'au moins un paramètre relatif à au moins une caractéristique de la mousse et d'au moins deux constantes, ledit au moins un paramètre de ladite fonction d'interpolation correspondant au débit d'injection dudit gaz, **caractérisé en ce que**, à partir d'au moins un échantillon de ladite formation, d'une représentation maillée représentative dudit gisement, on réalise au moins les étapes suivantes :

A) on détermine ledit modèle de déplacement en déterminant ledit facteur de réduction de mobilité dudit gaz et lesdites constantes de ladite fonction d'interpolation dudit modèle de déplacement, à partir au moins de mesures de pertes de charge réalisées au cours d'injections dans ledit échantillon dudit gaz sous forme non moussante et dudit gaz sous forme de mousse pour une pluralité de valeurs dudit débit d'injection dudit gaz ;
B) pour chacune des mailles de ladite représentation maillée traversées par ledit puits injecteur, on détermine un indice de productivité IP corrigé des effets rhéofluidifiants de ladite mousse dans ladite maille selon une formule du type :

$$IP = \alpha . IP_0$$

où $IP_0$ est un indice de productivité déterminé en supposant que ladite solution aqueuse comprenant ledit gaz sous forme de mousse est un fluide newtonien, et $\alpha$ est un facteur correctif qui est fonction d'au moins une caractéristique de ladite solution aqueuse comprenant ledit gaz sous forme de mousse ;
C) à partir dudit modèle de déplacement, dudit simulateur d'écoulement, de ladite représentation maillée et desdits indices de productivité déterminés pour lesdites mailles de ladite représentation maillée traversées par lesdits puits injecteur, on détermine un schéma d'exploitation dudit gisement et on exploite lesdits hydrocarbures.

2. Procédé selon la revendication 1, dans lequel, à partir de mesures de perméabilités relatives conventionnelles audit gaz sous forme non moussante et de mesures de perméabilités relatives conventionnelles à la phase aqueuse de ladite solution, on réalise l'étape A) selon au moins les sous-étapes suivantes :

i. pour chacune desdites fonctions d'interpolation, on réalise une injection dans ledit échantillon dudit gaz sous forme non moussante et dudit gaz sous forme de mousse pour une pluralité de valeurs dudit paramètre relatif à ladite fonction, on mesure respectivement une perte de charge avec mousse et une perte de charge sans mousse pour chacune desdites valeurs dudit paramètre relatif à ladite fonction, et on détermine au moins une valeur dudit paramètre relatif à ladite fonction d'interpolation maximisant un rapport entre lesdites pertes de charge sans mousse et lesdites pertes de charge avec mousse mesurées pour ladite fonction ;
ii. à partir au moins desdites mesures de perte de charge avec mousse et sans mousse réalisées pour lesdites valeurs desdits paramètres relatifs auxdites fonctions maximisant ledit rapport, desdites mesures de perméabilités relatives conventionnelles audit gaz sous forme non moussante et desdites mesures de perméabilités relatives conventionnelles à ladite phase aqueuse, on détermine ledit facteur de réduction de mobilité et on calibre lesdites constantes de chacune desdites fonctions d'interpolation.

3. Procédé selon la revendication 2, dans lequel après que l'étape i) ait été appliquée pour chacune desdites fonctions d'interpolation et avant l'étape ii), on réalise une injection dans ledit échantillon dudit gaz sous forme non moussante et dudit gaz sous forme de mousse selon lesdites valeurs de chacun desdits paramètres maximisant ledit rapport, on mesure respectivement une perte de charge avec mousse et une perte de charge sans mousse pour l'ensemble desdites valeurs desdits paramètres maximisant ledit rapport, et on applique l'étape ii) à partir en outre desdites mesures de perte de charge avec mousse et sans mousse réalisées pour ledit ensemble desdites valeurs desdits paramètres maximisant ledit rapport.

4. Procédé selon l'une des revendications précédentes, dans lequel ledit modèle de déplacement de la mousse s'exprime sous la forme :

$$k_{rg}^{FO}(S_g) = FM\, k_{rg}(S_g)$$

où $k_{rg}^{FO}(S_g)$ est la perméabilité relative audit gaz sous forme de mousse pour une valeur de saturation en gaz $S_g$ donnée, $K_{rg}(S_g)$ est la perméabilité relative audit gaz non moussant pour ladite valeur de saturation en gaz $S_g$, et $FM$ est ladite fonctionnelle s'exprimant sous la forme :

$$FM = \frac{1}{1+\left(M^{opt}-1\right)*\prod_k F_k}$$

où $M^{opt}$ est ledit facteur de réduction de mobilité dudit gaz et $F_k$ est une desdites fonctions d'interpolation, avec $k \geq 1$.

5. Procédé selon l'une des revendications précédentes, dans lequel lesdites fonctions d'interpolation sont au nombre de quatre et lesdits paramètres desdites fonctions sont une concentration en agent moussant, une saturation en eau, une saturation en huile, et ledit débit d'injection dudit gaz.

6. Procédé l'une des revendications précédentes, dans lequel on calibre lesdites constantes d'au moins une desdites fonctions d'interpolation par une méthode des moindres carrés, telle qu'une méthode inverse basée sur une minimisation itérative d'une fonction objectif.

7. Procédé selon l'une des revendications précédentes, dans lequel on détermine ledit indice de productivité audit puits injecteur $IP_0$ selon la formule de Peaceman.

8. Procédé selon la revendication 7, dans lequel on détermine ledit indice de productivité $IP_0$ en supposant que ladite solution aqueuse comprenant ledit gaz sous forme de mousse est un fluide Newtonien selon la formule suivante :

$$IP_0 = \frac{2\pi h k}{\ln\left(\frac{r'_0}{r_w}\right)}$$

où $r_w$ est le rayon dudit puits injecteur, $h$ est la hauteur de ladite maille, $k$ la perméabilité du milieu poreux dudit gisement et où $r'_0$ est un rayon équivalent de ladite maille traversée par ledit puits dans une représentation maillée à géométrie radiale.

9. Procédé selon la revendication 8, dans lequel ledit rayon $r'_0$ équivalent de ladite maille traversée par ledit puits est défini tel que :

$$P(r) = P_0 + \frac{\mu Q}{2\pi h k} \ln\left(\frac{r}{r'_0}\right) \text{ avec } P(r'_0) = P_0$$

où P représente l'évolution de la pression en fonction de la distance radiale r, $P_0$ désigne la pression assignée à ladite maille traversée par ledit puits, Q est le débit d'injection dudit gaz, et $\mu$ est la viscosité dudit gaz.

10. Procédé selon l'une des revendications précédentes, dans lequel ledit facteur correctif s'exprime selon la formule :

$$\alpha = \frac{1 + \frac{\lambda_g(r_w)}{\lambda_w(r_w)} FM(r_w)}{1 + \overline{\frac{\lambda_g}{\lambda_w} FM}}$$

où $\lambda_g$ est une mobilité associée à la phase gaz, $\lambda_w$ est une mobilité associée à la phase aqueuse, $r_w$ est le rayon dudit puits, $FM(r_w)$ est ladite fonctionnelle de réduction de mobilité du gaz jusqu'au rayon dudit puits, et $\overline{\frac{\lambda_g}{\lambda_w} FM}$ est la moyenne du produit de ladite fonctionnelle de réduction de mobilité dudit gaz par le rapport desdites mobilités associées à ladite phase gaz et à ladite phase aqueuse, ladite moyenne étant estimée dans ladite maille traversée par ledit puits.

11. Procédé selon l'une des revendications 1 à 9, dans lequel ledit facteur correctif s'exprime selon la formule :

$$\alpha = \frac{1 + \frac{f_g}{1 - f_g}}{1 + \overline{\frac{\lambda_g}{\lambda_w} FM}}$$

où $\lambda_g$ est une mobilité associée à la phase gaz, $\lambda_w$ est une mobilité associée à la phase aqueuse, $\overline{\frac{\lambda_g}{\lambda_w} FM}$ est la moyenne du produit de ladite fonctionnelle de réduction de mobilité dudit gaz par le rapport desdites mobilités associées à ladite phase gaz et à ladite phase aqueuse, ladite moyenne étant estimée dans ladite maille traversée par ledit puits, et $f_g$ est la qualité de la mousse.

12. Procédé selon l'une des revendications 1 à 9, dans lequel ledit facteur correctif s'exprime selon la formule :

$$\alpha = 1 + \frac{f_g}{1 - f_g}$$

où $f_g$ est la qualité de la mousse.

**Figure 1**

**Figure 2**

**Figure 3**

Europäisches
Patentamt

European
Patent Office

Office européen
des brevets

## RAPPORT DE RECHERCHE EUROPEENNE

**Numéro de la demande**

EP 19 30 5937

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A,D | EP 3 358 129 A1 (IFP ENERGIES NOW [FR]) 8 août 2018 (2018-08-08) * page 2 - page 18 * ----- | 1-12 | INV. E21B43/16 |
| A,D | T.N. LEEFTINK ET AL: "Injectivity errors in simulation of foam EOR", JOURNAL OF PETROLEUM SCIENCE AND ENGINEERING, vol. 126, 4 décembre 2014 (2014-12-04), pages 26-34, XP055655351, NL ISSN: 0920-4105, DOI: 10.1016/j.petrol.2014.11.026 * page 26 - page 34 * ----- | 1-12 | |
| A | EP 3 276 124 A1 (IFP ENERGIES NOW [FR]) 31 janvier 2018 (2018-01-31) * page 2 - page 15 * ----- | 1-12 | |
| T | A. SOULAT ET AL: "A Modified Well Index To Account For Shear-Thinning Behaviour In Foam EOR Simulation", SPE RESERVOIR CHARACTERISATION AND SIMULATION CONFERENCE AND EXHIBITION, 17 septembre 2019 (2019-09-17), XP055658347, DOI: 10.2118/196718-MS * le document en entier * ----- | 1-12 | |

**DOMAINES TECHNIQUES RECHERCHES (IPC)**

E21B

Le présent rapport a été établi pour toutes les revendications

| Lieu de la recherche | Date d'achèvement de la recherche | Examinateur |
|---|---|---|
| La Haye | 15 janvier 2020 | Hennion, Dmitri |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

............................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 30 5937

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-01-2020

| Document brevet cité au rapport de recherche | | Date de publication | Membre(s) de la famille de brevet(s) | | Date de publication |
|---|---|---|---|---|---|
| EP 3358129 | A1 | 08-08-2018 | CA | 2993549 A1 | 03-08-2018 |
| | | | EP | 3358129 A1 | 08-08-2018 |
| | | | FR | 3062672 A1 | 10-08-2018 |
| | | | US | 2018223638 A1 | 09-08-2018 |
| EP 3276124 | A1 | 31-01-2018 | CA | 2974549 A1 | 29-01-2018 |
| | | | EP | 3276124 A1 | 31-01-2018 |
| | | | FR | 3054594 A1 | 02-02-2018 |
| | | | US | 2018030817 A1 | 01-02-2018 |

EPO FORM P0460

Pour tout renseignement concernant cette annexe : voir Journal Officiel de l'Office européen des brevets, No.12/82

# EP 3 763 913 A1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 18305032 A

- US 15887498 B

**Littérature non-brevet citée dans la description**

- **BEUNAT V. ; BATÔT G. ; GLAND N. ; PANNACCI N. ; CHEVALLIER E. ; CUENCA A.** Influence of Wettability and Oil Saturation on the Rheological Behavior of CO2-Foams. *Presented at the EAGE 20th European Symposium on Improved Oil Recovery,* 2019
- **GASSARA O. ; DOUARCHE F. ; BRACONNIER B. ; BOURBIAUX B.** Equivalence Between Semi-empirical and Population-Balance Foam Models. *Transport in Porous Media,* 2017, vol. 120, 473, https://doi.org/10.1007/s1 1242-017-0935-8
- **GASSARA O. ; DOUARCHE F. ; BRACONNIER B. ; BOURBIAUX B.** Calibrating and Scaling Semi-empirical Foam Flow Models for the Assessment of Foam-Based EOR Processes (in Heterogeneous Reservoirs). *Transport in Porous Media,* 2019, https://doi.org/10.1007/s11242-018-01223-5

- **LEEFTINK, T. ; LATOOIJ, C. ; ROSSEN, W.** Injectivity errors in simulation of foam EOR. *Journal of Petroleum Science and Engineering,* 2015, vol. 126, 26-34
- **PEACEMAN, D.** Interpretation of Well-Block Pressures in Numerical Reservoir Simulation. *Society of Petroleum Engineers Journal,* 1978, vol. 18 (03), 183-194
- **VAN POOLEN, H. ; BIXEL, H. ; JARGON, J.** Individual Well Pressures in Reservoir Modeling. *Oil and Gas Journal,* 1970, 78-80
- **VAN POOLEN, H. ; BREITENBACH, E. ; THURNAU, D.** Treatment of Individual Wells and Grids in Reservoir Modeling. *Society of Petroleum Engineers Journal,* 1968, 341-346